# EUROPEAN PATENT APPLICATION

(11) **EP 3 330 230 A1**
(43) Date of publication of application: **06.06.2018**
(21) Application number: 16201432.8
(22) Date of filing: 30.11.2016
(51) Int. Cl.: C02F 1/461, C02F 3/00, C02F 3/30, C02F 1/467, C02F 9/00, C02F 1/04, C02F 1/28, C02F 1/44, C02F 103/20

(54) **METHOD AND APPARATUS FOR THE NITRIFICATION OF HIGH-STRENGTH AQUEOUS AMMONIA SOLUTIONS**

(71) Applicant: EAWAG, 8600 Dübendorf (CH)
(72) Inventor: The designation of the inventor has not yet been filed
(74) Representative: Schmauder & Partner AG Patent- & Markenanwälte VSP

(57) **Abstract**

In a method of biological nitrification of an ammonia containing aqueous medium, in a first oxidation step ammonia is oxidized to nitrite by ammonia oxidizing bacteria (AOB) and in a second oxidation step nitrite is oxidized to nitrate by nitrite oxidizing bacteria (NOB). In order to improve the method, a supplementary process of nitrite removal is applied which has a nitrite removal rate that is dependent on the instant nitrite concentration in the aqueous medium. An apparatus for carrying out the method comprises a reaction vessel operable as a continuous flow stirred tank reactor connected to a flow-through parallel plate electrolysis cell equipped with a graphite anode, a graphite cathode and a reference electrode, the apparatus comprising pumping means for recirculating aqueous medium contained in the reaction vessel through the electrolysis cell and potentiostatic regulating means for maintaining the anode potential at a fixed value against the reference electrode, the fixed potential value being in the range of 0.9 to 1.5 V versus SHE. A method of recycling nutrients from ammonia containing wastewater comprises the above steps of biological nitrification followed by water removal.

## Description

### Field of the Invention

The present invention generally relates to a method and an apparatus for the biological nitrification of high-strength aqueous ammonia solutions such as urine, manure, digester supernatant or landfill leachate. More particularly, it relates to a self-adjusting electrochemically assisted operating principle for the above.

### Background of the Invention

Source separation of urine is a promising approach to recycle nutrients from wastewater because most of the macro nutrients excreted by humans (nitrogen, phosphorus, potassium) are contained in urine (Larsen et al., 2009). It has been shown that evaporation of water is the most promising process to recover all these nutrients from urine in a concentrated solution (Udert and Wächter, 2012). However, before the water can be evaporated the urine needs to be stabilized to prevent ammonia volatilization which is achieved by lowering the pH value for example by adding an acid (Ek et al., 2006) or by nitrification (Udert and Wächter, 2012).

Adding an acid is inefficient because urine is well buffered, and it poses security risks due to the necessary handling of strong acids.

Nitrification is a more suitable method. It is a biological process involving two bacterial groups: ammonia oxidizing bacteria (AOB) and nitrite oxidizing bacteria (NOB). AOB oxidize ammonia to nitrite and NOB oxidize nitrite to nitrate. However, the NOB are inhibited by nitrite at low concentrations, which can easily lead to nitrite accumulation and the failure of the process (Fumasoli et al., 2016; Udert and Wächter, 2012). The NOB inhibition can appear when AOB activity, and therewith nitrite production, increases due to a change in operating conditions such as a change in pH, temperature, or the influent load.

Methods for measuring and also controlling the nitrite concentration in aqueous samples are known in principle. For example, US5382331 A addresses the problem of inline detection and control of nitrite in the context of corrosion control in steel water pipes, which relies on adding nitrite as an inhibitor. The measurement principle used is the correlation of the current to the nitrite concentration in a chronoamperometric measurement. In contrast, GB2174207 A deals with the continuous determination of nitrite and nitrate in aqueous media. It is based on the potentiostatic oxidation of nitrite to nitrate on a platinum or glassy carbon electrode and the determination of nitrite from the resulting current. Removal of nitrite is not addressed.

EP2619142 A1 addresses the removal of nitrate and ammonia from wastewater. The invention is a combined removal of ammonia and nitrate in an undivided flow-through electrolyzer. Nitrate is reduced to ammonia on a copper/nickel alloy and ammonia is oxidized to N₂ on a dimensionally stable anode. Nitrite is mentioned as a by-product of nitrate reduction, which is oxidized to nitrate at the anode. The control of nitrite is not the focus of the process and no coupling to a biological process is foreseen.

In view of all the above there is a need for an improved nitrification process that overcomes or at least reduces the above mentioned disadvantages, particularly the problems caused by the inhibition of NOB caused by nitrite produced in the first reaction step.

### Summary of the Invention

The above and other tasks are solved by the present invention.

According to one aspect of the invention (claim 1), there is provided a method of biological nitrification of an ammonia containing aqueous medium, wherein in a first oxidation step ammonia is oxidized to nitrite by ammonia oxidizing bacteria (AOB) and wherein in a second oxidation step nitrite is oxidized to nitrate by nitrite oxidizing bacteria (NOB), characterized in that a supplementary process of nitrite removal is applied which has a nitrite removal rate that is dependent on the instant nitrite concentration in the aqueous medium.

The present invention solves the problem of accumulating nitrite and the resulting process instability during nitrification by assisting the biological nitrite oxidation by NOB by providing a supplementary process of nitrite removal. The term "dependent on the instant nitrite concentration in the aqueous medium" shall be interpreted broadly. In general the rate of nitrite removal will depend on the type of supplementary process and could be almost constant over a certain concentration range or it could be essentially linearly dependent on nitrite concentration or it could have a more complex concentration dependence.

In the present context, "instant concentration" of nitrite shall be understood as the concentration of nitrite at a particular time. In practice, the underlying concentration measurement will be obtained over a certain measurement time and may be taken at one or possibly at multiple locations in the aqueous medium. The skilled person will know that depending on the specific situation it may be necessary to take appropriate averages of measurement data in such manner that the principal task, namely the avoidance of an excessive nitrite concentration in the region where nitrification is being carried out.

Advantageous embodiments are defined in the dependent claims and described further below.

The process is applicable to a range of ammonia containing aqueous media such as manure, digester supernatant or landfill leachate. According to an advantageous embodiment, the aqueous medium is urine, particularly source-separated urine (claim 2).

Various methods for carrying out the supplementary process of nitrite removal can be envisioned. For example, it is possible to monitor the instant nitrite concentration photometrically or with a selective nitrite sensor and to use some kind of feedback mechanism to steer a process that reduces nitrite concentration. In principle, the latter process could involve the addition of a suitable reactant. For example, one could pass the aqueous medium through an auxiliary reactor kept under oxygen-free conditions and add suitable organic species to promote denitrification. Alternatively, if the overall method is carried out in a flow-through mode, the controlled nitrite removal is advantageously achieved by reducing the rate of influent medium.

According to a particularly advantageous embodiment (claim 3), the supplementary process comprises exposing the aqueous medium to a potentiostatically operated electrolysis cell comprising an anode, a cathode and a reference electrode, wherein the anode potential is maintained at a fixed value against the reference electrode (e.g. a silver / silver chloride electrode, a (Ag/AgCl), mercury / mercury sulfate electrode (MSE), or a saturated calomel electrode (SCE)), the fixed potential value being in the range of 0.9 to 1.5 V versus a standard hydrogen electrode reference (SHE). By maintaining the potential of the anode in the range of 0.9 to 1.5 V, preferably about 1.2 V versus SHE or lower, very few reactions take place in nitrified urine and similar ammonia containing aqueous media, which results in just a small background current in case no nitrite is present. Nitrite, however, starts to be oxidized on graphite anodes at about 0.9 V versus SHE. Thus, the presence of nitrite leads to a very selective oxidation to nitrate at an anode potential of about 1.2 V versus SHE.

The term "exposing the aqueous medium to a potentiostatically operated electrolysis cell" shall be understood in a broad sense. It shall comprise, as one example, the case that the aqueous medium is in contact with the cathode and anode of the electrolysis cell simply immersed in a reaction vessel containing the aqueous medium. But it shall also comprise, as another example, the case where the electrolysis cell is arranged separate from the reaction vessel and the aqueous medium is forced to flow through the electrolysis cell.

In the context of biological nitrification, the embodiment with potentiostatically operated electrolysis cell is very beneficial for two reasons. If nitrite accumulates due to high AOB activity, the electrolysis cell automatically starts to degrade nitrite. There is no need for nitrite detection or monitoring because the electrolysis cell switches on automatically and no chemicals need to be added. It is further beneficial that only small currents are flowing if no nitrite is present. This reduces the energy demand during stable operation of biological urine nitrification. When the electrochemical cell is operated in potentiostatic mode, the current and therewith the nitrite oxidation rate increases with the nitrite concentration. This effect balances out the behavior of biological nitrite oxidation: at the critical concentrations, when this process will be applied, the rate of biological nitrite oxidation decreases when nitrite accumulates. In other words, the use of electrochemical nitrite oxidation turns nitrification from a positive feedback process to a negative feedback process, which stabilizes itself.

While the above described process will generally work with an anode potential maintained in the range of 0.9 to 1.5 V versus a standard hydrogen electrode reference (SHE), it is preferable to use a value in the range of 1.1 to 1.3 V, particularly about 1.2 V (claim 4).

It will be understood that the anode and cathode can be selected from a variety of types and designs. Advantageously, both the anode and the cathode are configured as graphite electrodes (claim 5).

According to an advantageous embodiment, the electrical current flowing through the anode or the applied voltage is used to quantify the concentration of nitrite present in the electrolysis cell. (claim 6). In this manner the process detects and quantifies nitrite while removing nitrite at the same time.

It has generally been found to be advantageous if the pH value of the aqueous medium in the reactor is maintained in the range of 5.4 to 8.0 (claim 7).

According to a further embodiment (claim 8), the nitrification method further comprises a step of removing micro-pollutants contained in the wastewater. This may be done, for example, by means of an appropriately configured activated carbon filter system.

Advantageously (claim 9), the nitrification method is carried out as a continuous flow process wherein ammonia containing aqueous medium with an initial ammonia concentration flows into a reaction zone where it is subjected to said first and second oxidation steps and subsequently flows out of the reaction zone having a comparatively lower ammonia concentration. In this process there is also a decomposition of a substantial fraction of the organic compounds initially present in the aqueous medium, which is particularly favorable when using an activated carbon filter system.

In one embodiment (claim 10), the pH-value of the aqueous medium is maintained by controlling the rate of influent ammonia containing aqueous medium.

According to another aspect of the invention (claim 11), an apparatus for carrying out the method of the invention comprises a reaction vessel operable as a continuous flow stirred tank reactor connected to a flow-through parallel plate electrolysis cell equipped with a graphite anode, a graphite cathode and a reference electrode, the apparatus comprising pumping means for recirculating aqueous medium contained in the reaction vessel through the electrolysis cell and potentiostatic regulating means for maintaining the anode potential at a fixed value against the reference electrode, the fixed potential value being in the range of 0.9 to 1.5 V versus SHE

Potentiostatic arrangements including the electronic control circuitry that is needed to ensure stable operation thereof are basically known to the skilled person. In the simplest three-electrode configuration, they comprise a working electrode, a counter electrode and a reference electrode. The system functions by maintaining the potential of the working electrode at a constant level with respect to the reference electrode, which is achieved by adjusting the current at the counter electrode. As will be understood, if such an arrangement is used for oxidizing nitrite, the anode acts as the working electrode whereas the cathode acts as the counter electrode. It will also be understood that the reference electrode used in such an arrangement need not be a standard hydrogen electrode (SHE). The reference to a potential defined versus the SHE, which is a convenient definition, implies that if using another type of reference electrode it will be necessary to duly take into account the potential of the reference electrode versus the SHE.

According to an advantageous embodiment of the apparatus (claim 12), the reference electrode is a silver/silver chloride (Ag/AgCl) electrode, a mercury/mercurous sulfate (MSE) electrode or a saturated calomel (SCE) electrode.

According to a further embodiment (claim 13) the apparatus further comprises filtering means for removing micro-pollutants from the aqueous medium. In particular, the filtering means can comprise an activated carbon filter system.

According to yet another aspect of the invention (claim 14), a method of recycling nutrients from ammonia containing wastewater comprises the steps of biological nitrification according to the first aspect followed by water removal.

According to one embodiment of the recycling method (claim 15), the water removal is effected by evaporation. Alternatively or additionally, water removal may be effected by reverse osmosis or any other suitable physical process.

### Brief description of the drawings

The above mentioned and other features and objects of this invention and the manner of achieving them will become more apparent and the invention itself will be better understood by reference to the following description of embodiments of this invention taken in conjunction with the accompanying drawings, wherein are shown:
- Fig. 1: a schematic representation of an apparatus for carrying out biological nitrification of an ammonia containing aqueous medium;
- Fig. 2: a comparison of total, biological, and electrochemical nitrite oxidation rates resulting from a series of batch experiments; and
- Fig. 3: a) concentrations of ammonia, nitrite, and nitrate as a function of time before and after a sudden load increase by 40%. b) current density, O₂ concentration and pH value during the same experiment.

### Detailed description of the invention

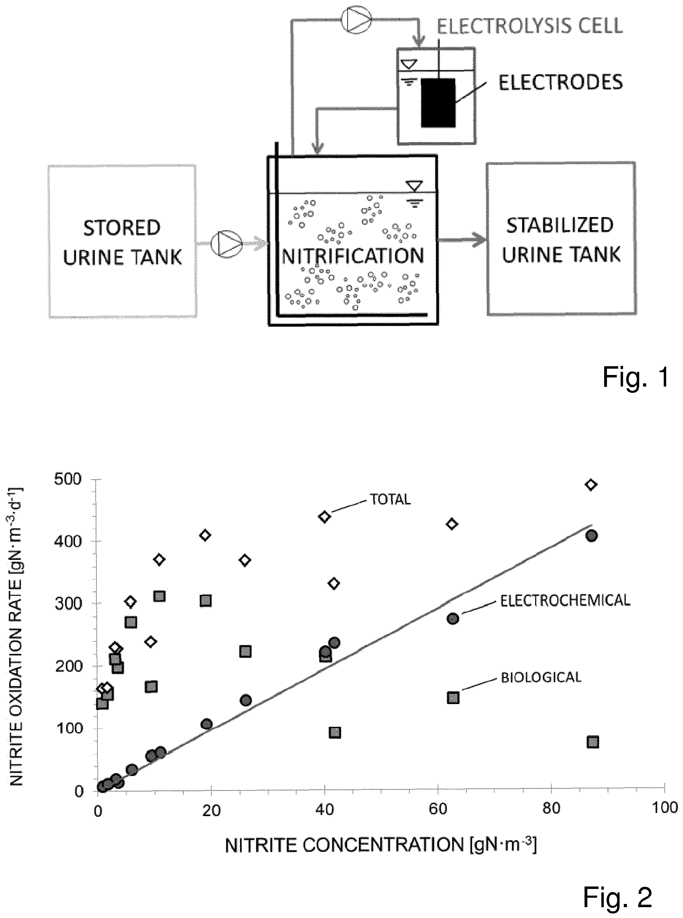

The apparatus shown in Fig. 1 comprises a potentiostatically operated electrolysis cell coupled to a biological urine nitrification reactor. The nitrification is carried out in a continuous flow stirred tank reactor (CSTR). The content of the reactor is simultaneously recirculated through an electrolysis cell by means of a pump. The electrolysis cell consists of a parallel plate flow cell equipped with a graphite anode and a graphite cathode. However, the electrochemical cell should also work with other types of electrodes, i.e. with other electrode materials and shapes. A reference electrode is used to control the anode potential. Electrochemical nitrite oxidation sets in automatically as soon as elevated nitrite concentrations are present in the reactor.

### Examples:

In a first series of batch experiments an increasing amount of nitrite was added as a pulse to a running urine nitrification reactor coupled with an electrolysis cell. The nitrite oxidation rates were then evaluated in function of the nitrite concentration. With the aid of a nitrogen mass balance, the share of biological and electrochemical nitrite oxidation could be set out (Fig. 2). Biological nitrite oxidation was the dominant process until a concentration of 40 gN·m⁻³ was reached. At nitrite concentrations higher than 40 gN·m⁻³, the electrochemical nitrite oxidation rate was higher. The biological nitrite oxidation increased until a concentration of 15 gN·m⁻³ was reached. Above this concentration, the NOB activity decreased due to inhibition. The electrochemical nitrite oxidation rate was increasing linearly up to a nitrite concentration of 90 gN·m⁻³ reaching a value of about 400 gN·m⁻³·d⁻¹. The slope of the straight line depends on the ratio of electrode surface to reactor volume and on the applied anode potential. The more electrode surface is provided for a given reactor volume the steeper is the slope.

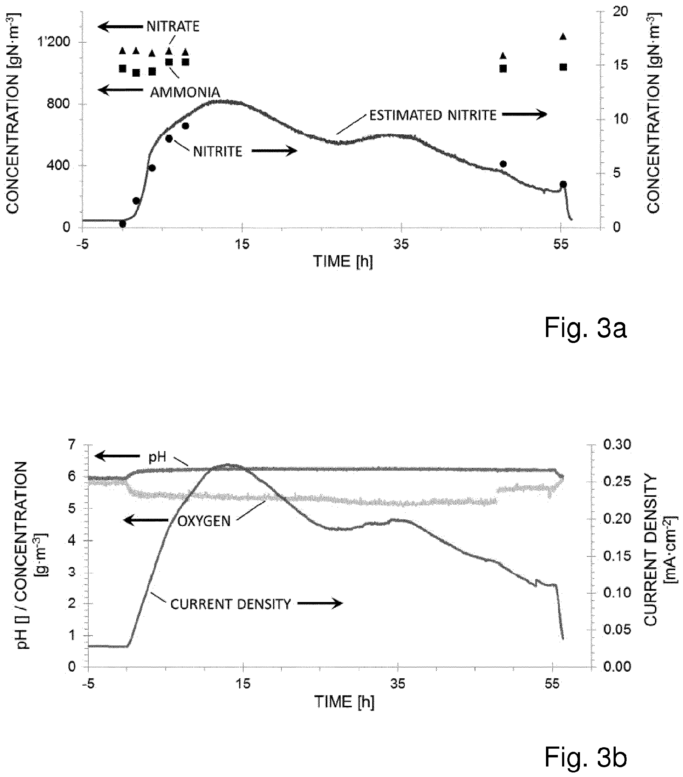

The second series of experiments consisted of influent load increase experiments. The inflow was increased from a base load of stored urine at which biological nitrification was running stably. The influent load was increased from 5% up to 100% of the base load. The increased ammonia load and pH led to increased AOB activity and nitrite accumulation. For influent load increases up to 20% the nitrite accumulation was negligible meaning that NOB activity could keep up with AOB activity. Load increases of more than 20% and up to 40% resulted in the accumulation of nitrite and the electrochemical oxidation of nitrite (Fig. 3). The nitrite concentrations reached values up to 12 gN·m⁻³ and electrochemical nitrite oxidation was estimated to account for about 15% of the nitrite oxidation at maximum. By keeping the nitrite concentrations low, electrochemical nitrite oxidation allowed more NOB to grow into the system and to adapt to the higher influent load. A load increase of 100% resulted in strong nitrite accumulation and the increase of pH to values at which AOB were inhibited, probably by ammonia, resulting in a complete process breakdown.

## Claims

1. A method of biological nitrification of an ammonia containing aqueous medium, wherein in a first oxidation step ammonia is oxidized to nitrite by ammonia oxidizing bacteria (AOB) and wherein in a second oxidation step nitrite is oxidized to nitrate by nitrite oxidizing bacteria (NOB), **characterized in that** a supplementary process of nitrite removal is applied which has a nitrite removal rate that is dependent on the instant nitrite concentration in the aqueous medium.

2. The method according to claim 1, wherein the aqueous medium is urine.

3. The method according to claim 1 or 2, wherein the supplementary process comprises exposing the aqueous medium to a potentiostatically operated electrolysis cell comprising an anode, a cathode and a reference electrode, wherein the anode potential is maintained at a fixed value against the reference electrode, the fixed potential value being in the range of 0.9 to 1.5 V versus a standard hydrogen electrode reference (SHE).

4. The method according to claim 3, wherein the anode potential is maintained to a value in the range of 1.1 to 1.3 V versus SHE.

5. The method according to claim 3 or 4, wherein the anode and cathode are configured as graphite electrodes.

6. The method according to one of claims 3 to 5, wherein the electrical current flowing through the anode or the applied voltage is used to quantify the concentration of nitrite present in the electrolysis cell.

7. The method according to one of claims 1 to 6, wherein the pH value of the aqueous medium is maintained in the range of 5.4 to 8.0.

8. The method according to one of claims 1 to 7, further comprising a step of removing micro-pollutants contained in the wastewater.

9. The method according to one of claims 1 to 8, which is carried out as a continuous flow process wherein ammonia containing aqueous medium with an initial ammonia concentration flows into a reaction zone where it is subjected to said first and second oxidation steps and subsequently flows out of the reaction zone having a comparatively lower ammonia concentration.

10. The method according to claims 8 and 9, wherein the pH-value of the aqueous medium is maintained by controlling the rate of influent ammonia containing aqueous medium.

11. An apparatus for carrying out the method according to claim 9, comprising a reaction vessel operable as a continuous flow stirred tank reactor connected to a flow-through parallel plate electrolysis cell equipped with a graphite anode, a graphite cathode and a reference electrode, the apparatus comprising pumping means for recirculating aqueous medium contained in the reaction vessel through the electrolysis cell and potentiostatic regulating means for maintaining the anode potential at a fixed value against the reference electrode, the fixed potential value being in the range of 0.9 to 1.5 V versus SHE.

12. The apparatus according to claim 11, wherein the reference electrode is a silver/silver chloride(Ag/AgCl) electrode, a mercury/mercurous sulfate (MSE) electrode or a saturated calomel (SCE) electrode.

13. The apparatus according to claim 11 or 12, further comprising filtering means for removing micro-pollutants from the aqueous medium.

14. A method of recycling nutrients from ammonia containing wastewater, comprising the steps of biological nitrification according to one of claims 1 to 10 followed by water removal.

15. The method according to claim 14, wherein the water removal is effected by evaporation.
